# EUROPEAN PATENT APPLICATION

(11) **EP 4 349 594 A1**
(43) Date of publication of application: **10.04.2024**
(21) Application number: 22815895.2
(22) Date of filing: 23.05.2022
(51) Int. Cl.: B32B 27/00, B32B 27/18, B32B 27/30, E02D 37/00, E21D 11/10, E01D 22/00, E04G 21/24, E04G 21/28, E04G 21/30, C04B 41/71, E04G 23/02, C09J 7/38

(54) **STRUCTURE PROTECTION SHEET, AND METHOD FOR MANUFACTURING REINFORCED STRUCTURE**

(30) Priority: 31.05.2021 JP 2021091849; 22.06.2021 JP 2021103336; 19.05.2022 JP 2022082342
(71) Applicant: Keiwa Incorporated, Tokyo 103-0025 (JP)
(72) Inventor: TERAMOTO, Koji, Tokyo 103-0025 (JP); TANI, Satoru, Tokyo 103-0025 (JP)
(74) Representative: Dehns
(86) International application number: PCT/JP2022/021110
(87) International publication number: WO 2022/255145

(57) **Abstract**

Provided is a structure protection sheet that allows for significant shortening of the work period required to place the protection sheet on the surface of a structure such as a concrete structure, that can protect the structure over a long period of time, and that further has excellent strength properties. The structure protection sheet is a sheet to be attached to the surface of a structure and includes, in order, a bonding layer, a polymer-cement hardened layer, and a resin layer.

## Description

### Technical Field

The present invention relates to structure protection sheets and methods for producing reinforced structures. In particular, the present invention relates to: a structure protection sheet that allows for significant shortening of the work period required to place a protection layer on the surface of a structure such as a concrete structure and that can protect the structure over a long period of time; and a method for producing a reinforced structure using the structure protection sheet.

### Background Art

Civil engineering structures, as exemplified by road bridges, tunnels, river management facilities such as sluice gates, sewer culverts, and quay walls, are subjected to repair work or reinforcement work for addressing aging of the structures. In the repair work, a defective or fragile part is repaired, and then several coats of coating material are applied to the repaired part. In the reinforcement work, several coats of reinforcing coating material are applied over the entirety of the part to be reinforced.

The process of applying several coats in the repair or reinforcement work includes, for example, an undercoating step, an intermediate coating step, and a finish coating step which are performed in order on a concrete structure. Generally, the intermediate coating step and the other coating steps cannot be performed continuously because the coat applied in each step needs to be dried. For example, in the case where a total of five coats are to be formed through an undercoating step, a first intermediate coating step, a second intermediate coating step, a first finish coating step, and a second finish coating step, it takes at least five days to complete all the steps. Furthermore, the coating work is affected by weather since it is performed outdoors. In rainy weather, the applied coat cannot be dried sufficiently, or the coating work itself has to be canceled. Thus, the work period is difficult to shorten, and accordingly a lot of labor cost is required. Additionally, the coating work and the quality (the properties such as thickness, surface roughness, and moisture content) of the applied coats are affected by the ambient conditions (such as humidity and temperature) during the coating steps, and thus the quality of the applied coats is likely to be unstable.

The coating work is done by troweling or spraying. Whether reliable repair or reinforcement can be achieved with uniform application of coats depends largely on the skill of the worker. This means that the quality of the applied coats varies according to the skill of the worker. Additionally, along with aging, and decrease in number, of construction workers, those who are engaged in repair or reinforcement work on concrete structures are getting scarce. Under such circumstances, there is a demand for a simple repair method that can be carried out even by workers who are not well-trained.

Techniques for solving the problems as described above have been proposed. For example, Patent Literature 1 proposes a sheet and method that allow for simple and low-cost concreate repair achievable in a short work period and that can reliably prevent concrete deterioration. The proposed method is one for concrete repair using a concrete repair sheet that includes an intermediate layer including a resin film and that further includes surface layers made of woven materials and placed on both sides of the intermediate layer via an adhesive resin. In this method, the concrete repair sheet is attached by means of a construction adhesive to a concrete surface to be repaired, and then a coating material is applied to the surface layer of the attached concrete repair sheet that is opposite from the concrete surface.

Improvements have been made also to coating materials. For example, Patent Literature 2 proposes a method for protecting a concrete structure by using a coating material that prevents alkali-aggregate reactions, conforms well to cracks of the concrete structure, does not suffer blistering due to temperature rise after being applied and formed into a coat, and prevents peeling off of concrete. The proposed method is one in which a primer coat is formed on the surface of the concrete structure and then another coat is formed on the surface of the primer coat. The primer coat is made of a composition containing a cationic (meth)acrylic polymer emulsion and an inorganic hydraulic substance. The coat formed on the surface of the primer coat is made of a composition containing an alkyl (meth)acrylate emulsion and an inorganic hydraulic substance, and has an elongation at 20°C of 50 to 2000%, a salt penetration rate of 10⁻² to 10⁻⁴ mg/cm²•day, a water vapor transmission rate of 5 g/m²•day or more, and a thickness of 100 to 5000 µm.

### Citation List

### Patent Literature

PTL 1: Japanese Laid-Open Patent Application Publication No. 2010-144360
PTL 2: Japanese Laid-Open Patent Application Publication No. 2000-16886

### Summary of Invention

### Technical Problem

A conventional concrete repair sheet such as that proposed in Patent Literature 1 has problems to be solved, and the problems include: differences in adhesive force between a substrate and other layers (such as an adhesive layer and a reinforcing member); differences in elongation among the substrate, adhesive layer, reinforcing member, etc.; and an insufficient adhesive strength between an adhesive layer and concrete. Specifically, in the event that the concrete repair sheet, in which the substrate and the reinforcing member are attached together by an adhesive layer, is subjected to a stress during or after attachment to concrete, the differences in elongation among the substrate, adhesive layer, reinforcing member, etc. can cause interfacial delamination attributed to a difference between the adhesive force between the substrate and the adhesive layer and the adhesive force between the adhesive layer and the reinforcing member.

An adhesive layer of the concrete repair sheet is softened by heating or any other means and then attached to concrete. In case that a sufficient adhesive strength cannot be achieved, the concrete repair sheet could detach from the concrete surface and fail to function as a repair sheet. It also sometimes happens that the concrete bulges with time after attachment of the concrete repair sheet. A possible reason for this phenomenon is that water vapor inside the concrete cannot escape due to the presence of the repair sheet which has low water vapor permeability.

As described in Background Art above, a method in which coats are formed by coating work at the worksite takes one day per coat. For example, in the case of forming a total of six coats including an undercoat and a finish coat, it takes six days to complete the formation of all the coats. Additionally, the coat thickness varies from coat to coat, and the quality or properties such as surface roughness and moisture content of the coats are likely to be unstable.

Typical targets to be repaired with concrete repair sheets are large-sized concrete structures such as civil engineering structures, as exemplified by road bridges, tunnels, river management facilities such as sluice gates, sewer culverts, and quay walls. Thus, the concrete repair sheets themselves are required to have sufficient strength properties (the term "strength properties" is intended to include tensile strength, flexural strength, hardness, surface strength, punching strength, toughness, etc., and the same applies hereinafter). Any conventional concrete repair sheets cannot be said to have sufficient strength properties.

The present invention has been made to solve the problems as descried above, and an object of the present inventions is to provide: a structure protection sheet that allows for significant shortening of the work period required to place the protection sheet on the surface of a structure such as a concrete structure, that can protect the structure over a long period of time, and that further has excellent strength properties; and a method for producing a reinforced structure using the structure protection sheet.

### Solution to Problem

The present inventors have made studies to develop a concrete protection sheet that allows for reliable protection of concrete over a long period of time without the use of a method in which layers are formed on the concrete surface by any coating technique.

As a result, the inventors have invented a concrete protection sheet having properties tailored to the characteristics of concrete. Specifically, the concrete protection sheet has the following properties: conformability high enough to conform to cracks or bulges of concrete; waterproof performance, salt penetration resistance, and anti-neutralization ability high enough to prevent penetration of deterioration factors such as water and chloride ions into concrete; and water vapor permeability high enough to allow concrete to discharge moisture in the form of water vapor. The concrete protection sheet further includes a layer for ensuring the strength properties of the concrete protection sheet itself. Additionally, the inventors have found that forming a bonding layer in advance on that side of the concrete protection sheet which is to be attached to a concrete surface makes it possible to attach the concrete protection sheet to concrete via the bonding layer and eliminates the need to apply an adhesive and form an adhesive layer on the concrete surface at the worksite, leading to very high work efficiency. Based on the above findings, the inventors have completed the present invention. The technical idea of the present invention is applicable also to structure protection sheets for structures other than concrete structures.
(1) A structure protection sheet according to the present invention is a structure protection sheet to be attached to a surface of a structure, the structure protection sheet including, in order, a bonding layer, a polymer-cement hardened layer, and a resin layer.

In this invention, the polymer-cement hardened layer, which is placed facing the structure, is excellent in properties such as adhesion to the structure and can offer good performance also in terms of punching strength etc.

The structure protection sheet can be mass-produced by a coating step and a drying step on a factory production line. Thus, the structure protection sheet allows for cost reduction, significant shortening of the work period spent at the worksite, and long-term protection of the structure.

Additionally, since the bonding layer is located on the surface of the polymer-cement hardened layer, the structure protection sheet can be attached to the surface of the structure via the bonding layer without the need to apply an adhesive and form an adhesive layer at the worksite. This leads to very high work efficiency.

In the structure protection sheet according to the present invention, the bonding layer preferably includes an acrylic pressure-sensitive adhesive.

Acrylic pressure-sensitive adhesives allow for high flexibility in material design and are excellent in transparency, weathering resistance, and heat resistance. The use of an acrylic pressure-sensitive adhesive enables the structure protection sheet according to the present invention to more successfully protect the structure.

The structure protection sheet according to the present invention preferably has a punching strength of 1.5 kN or more as measured by a punching test specified in JSCE-K 533.

In this case, the structure protection sheet according to the present invention can successfully prevent problems such as peeling off of concrete or the like from the surface of the structure.

The structure protection sheet according to the present invention preferably has a bond force of 0.5 N/mm² or more when attached to the surface of the structure via the bonding layer.

In this case, the structure protection sheet according to the present invention can protect the surface of the structure very effectively over a long period of time.

In the structure protection sheet according to the present invention, the bonding layer preferably has a thickness of 20 to 500 µm.

In this case, the bonding layer can exhibit an excellent bond force when attached to the surface of the structure, and the structure protection sheet according to the present invention can protect the surface of the structure very effectively over a long period of time.

In the structure protection sheet according to the present invention, the polymer-cement hardened layer may contain a cement component and a resin, and a content of the resin in the polymer-cement hardened layer may be from 10 to 40% by weight. The content of the resin is more preferably from 20 to 30% by weight.

In this case, the polymer-cement hardened layer has high conformability and compatibility and thus exhibits high adhesion by itself. Additionally, the cement component contained in the polymer-cement hardened layer facing the structure acts to enhance the adhesion to the structure such as a concrete structure.

The structure protection sheet according to the present invention preferably further includes a mesh layer.

In this case, the inclusion of the mesh layer enables the structure protection sheet according to the present invention to excel in strength properties etc.

(2) A method for producing a reinforced structure according to the present invention is a method for producing a structure using the structure protection sheet according to the present invention, the method including attaching the structure protection sheet to a surface of a structure via the bonding layer.

In this invention, the structure protection sheet used is made up of layers that do not include a substrate or a reinforcing member and can thus be easily attached to the surface of the structure. Additionally, the attachment of the structure protection sheet to the surface of the structure can be accomplished via the bonding layer at the worksite. Thus, the structure protection sheet with excellent strength properties can be reliably attached to the surface of the structure even by a worker who is not well-trained. This allows for significant shortening of the work period and long-term protection of the structure.

### Advantageous Effects of Invention

The present invention can provide a structure protection sheet that can protect a structure such as a concrete structure over a long period of time and a method for producing a reinforced structure using the structure protection sheet. In particular, the present invention can provide a structure protection sheet with properties tailored to the characteristics of a structure, the structure protection sheet being adapted to: conform to cracks or bulges of the structure; prevent penetration of deterioration factors such as water and chloride ions into the structure; exhibit permeability high enough to permit discharge of moisture or deterioration factors from the structure; have improved strength properties; and be easily attachable to the surface of the structure. The structure protection sheet is also advantageous in that the stability and uniformity of quality can be improved compared to those of conventional protection layers formed by manual coating processes.

### Brief Description of Drawings

FIGS. 1A and 1B are cross-sectional views showing examples of a structure protection sheet according to the present invention.
FIGS. 2A and 2B are schematic views showing how the structure protection sheet according to the present invention is attached to a structure.
FIGS. 3A and 3B are cross-sectional views showing other examples of the structure protection sheet according to the present invention.
FIGS. 4A and 4B are schematic views showing an example of a mesh layer of the structure protection sheet according to the present invention.
FIGS. 5A to 5D illustrate an example where the structure protection sheet is used in a cast-in-place method.
FIG 6 is a schematic view showing an example where a resin layer of the structure protection sheet according to the present invention is embossed.
FIG 7 illustrates how to form a textured pattern on the resin layer of the structure protection sheet.

### Description of Embodiments

Hereinafter, a structure protection sheet according to the present invention and a method for testing a structure using the structure protection sheet will be described with reference to the drawings. The present invention can be modified into various forms having the technical features of the present invention and is not limited to the embodiments described below and depicted in the drawings.

### [Structure Protection Sheet]

The structure protection sheet according to the present invention is a sheet to be attached to the surface of a structure. The structure protection sheet attached to the structure includes a resin layer as an outermost layer, and a pattern for deformation detection is formed on the surface of the resin layer.

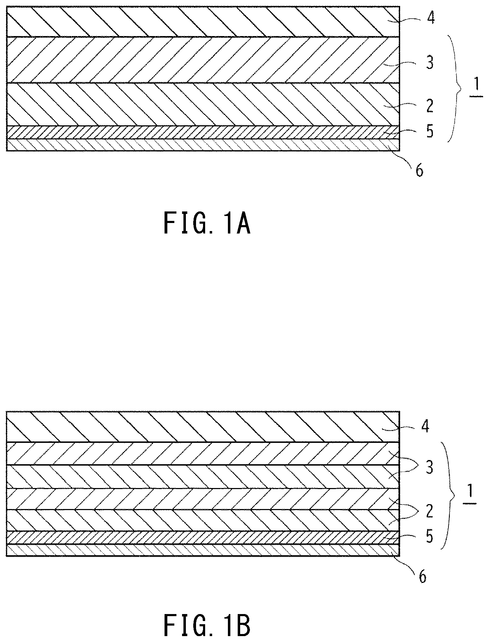

As shown in FIG 1, such a structure protection sheet 1 according to the present invention includes, in order, a bonding layer 5, a polymer-cement hardened layer 2, and a resin layer 3. Each of the polymer-cement hardened layer 2 and the resin layer 3 may be formed as a single layer as shown in FIG 1A or may be formed as a multilayer as shown in FIG 1B. Depending on the required performance, another layer may be located between the polymer-cement hardened layer 2 and the resin layer 3.

The structure protection sheet 1 according to the present invention preferably has a water vapor transmission rate of 10 to 50 g/m²•day. It may be inferred that the polymer-cement hardened layer 2, which contains a cement component, is expected to have a certain level of water vapor transmission rate, whereas the resin layer 3 located on the polymer-cement hardened layer 2 is inferior in water vapor transmission rate. However, the present invention is immune to this problem, and the structure protection sheet 1 as a whole can exhibit a water vapor transmission rate within a certain range. Thus, the structure protection sheet 1 attached to a structure such as a concrete structure permits water vapor present inside the structure to successfully pass through, and come out of, the structure protection sheet 1. This can successfully prevent bulging of the structure and further prevent a reduction in the adhesive performance of the structure protection sheet 1. One of the other advantages offered by the structure protection sheet 1 having a water vapor transmission rate within a certain range is that the structure protection sheet 1's configuration which permits easy escape of water vapor is likely to reduce corrosion of a metal (such as reinforcing steel) contained in the structure. Additionally, in the case where the structure protection sheet 1 is attached to a structure in a rainy day in which the structure has a wet surface and contains moisture within itself, the fact that the structure protection sheet 1 has a water vapor transmission rate as mentioned above allows moisture infiltrating the structure to easily come out of the structure after attachment of the structure protection sheet 1 (after production of a reinforced structure). Furthermore, the structure protection sheet 1 according to the present invention is suitable for attachment to freshly-hardened concrete which contains a lot of moisture within it.

Another advantage of the structure protection sheet 1 according to the present invention is that the controllability of the water vapor transmission rate enables the structure protection sheet 1 to be attached to the surface of a structure even in a situation where, for example, cement of the structure has not yet hardened. If cement molded into a structure rapidly loses moisture during hardening, the rapid loss of moisture is likely to lead to the cement being porous and the structure having a reduced strength. The structure protection sheet 1 according to the present invention is also advantageous in that attaching the structure protection sheet 1 to cement before hardening allows for control of the speed of moisture removal from the cement during hardening, thus reducing the likelihood that the cement becomes porous as descried above.

If the water vapor transmission rate is less than 10 g/m²•day, the structure protection sheet 1 according to the present invention cannot permit water vapor to pass therethrough sufficiently to prevent phenomena such as bulging of a structure to which the structure protection sheet 1 has been attached, and the adhesive performance of the structure protection sheet 1 could be insufficient. If the water vapor transmission rate is more than 50 g/m²•day, the speed of moisture removal from cement during hardening could be so high as to cause the hardened cement to have the defect of being porous. The water vapor transmission rate is preferably in the range of 20 to 50 g/m²•day.

The structure protection sheet 1 according to the present invention which has such a water vapor transmission rate can be obtained, for example, by using the polymer-cement hardened layer 2 described later and using a resin having a water vapor transmission rate within a certain range as a component of the resin layer 3 described later.

The water vapor transmission rate in the present invention can be measured by a method described later.

The structure protection sheet 1 according to the present invention is preferably so resistant to sulfuric acid that when an architectural concrete foundation block wrapped with the structure protection sheet 1 is immersed in a 5% aqueous solution of sulfuric acid for 30 days, the depth of sulfuric acid penetration into the structure protection sheet 1 may be 0.1 mm or less. If the depth of sulfuric acid penetration is more than 0.1 mm, this means that the structure protection sheet 1 according to the present invention has insufficient sulfuric acid resistance. Such a structure protection sheet with insufficient sulfuric acid resistance could be unusable for protection of a structure such as a sewer concrete structure which can be corroded by sulfuric acid. The depth of sulfuric acid penetration is more preferably at most 0.01 mm.

The depth of sulfuric acid penetration in the present invention can be measured by a method described in Examples below.

Two or more structure protection sheets according to the present invention may be used together by being placed on top of one another. A structure protected with one structure protection sheet according to the present invention can be further protected with another protection sheet placed on top of the one structure protection sheet. For example, two structure protection sheets according to the present invention may be attached to a structure in such a manner that the two structure protection sheets are arranged side-by-side, and then another structure protection sheet according to the present invention may be further attached so as to cover the boundary between the side-by-side structure protection sheets.

The structure protection sheet 1 according to the present invention includes the polymer-cement hardened layer 2 containing cement and a resin component. Thus, one structure protection sheet 1 according to the present invention exhibits high adhesive performance to the resin layer 3 of another structure protection sheet 1 previously attached to a structure. This is why two or more structure protection sheets 1 according to the present invention can be suitably used together by being placed on top of one another.

For the structure protection sheet 1 according to the present invention, a tear load as measured according to a tear load test as specified in JIS K 6781 is preferably from 3 to 20 N. When the tear load is in such a range, the structure protection sheet 1 tears in a desired way upon a destruction or collapse of a structure protected with the structure protection sheet 1, and thus a chain of destructions or collapses can be prevented. Additionally, in a situation such as when a part of the protected structure needs to be removed, the removal of the part of the structure can be carried out since the structure protection sheet 1 can be torn at any point. If the tear load is less than 3 N, protection of the structure is difficult to achieve with the structure protection sheet 1. If the tear load is more than 20 N, the structure protection sheet 1 could fail to tear at a desired time. The tear load is more preferably in the range of 5 to 15 N.

The tear load in the present invention can be measured by a method described in Examples below.

For the structure protection sheet 1 according to the present invention, the thickness distribution is preferably within ±100 µm. When the thickness distribution is within this range, the use of the structure protection sheet 1 allows a worker to reliably place layers with a small variation in thickness onto the surface of a structure even if the worker is not well-trained. Additionally, controlling the thickness distribution within the above range makes it easier to reinforce a structure uniformly.

The polymer-cement hardened layer 2 to be placed facing a structure is excellent in properties such as adhesion to the structure, and the resin layer 3 located on the polymer-cement hardened layer 2 can be easily provided with desired properties such as high waterproof performance, high salt penetration resistance, and high anti-neutralization ability.

Additionally, the structure protection sheet 1 according to the present invention can be mass-produced by a coating step and a drying step on a factory production line. Thus, the structure protection sheet 1 allows for cost reduction, significant shortening of the work period spent at the worksite, and long-term structure protection.

Additionally, the structure protection sheet 1 according to the present invention, which includes the bonding layer 5, eliminates the need to apply an adhesive and form an adhesive layer at the worksite, and can be attached by a worker to the surface of a structure via the bonding layer with a uniform thickness even if the worker is not well-trained. Thus, the work period required for sheet attachment to the surface of the structure can be significantly shortened, and the structure can be protected over a long period of time.

Hereinafter, specific examples of the constituent elements of the invention will be described in detail.

### (Structure)

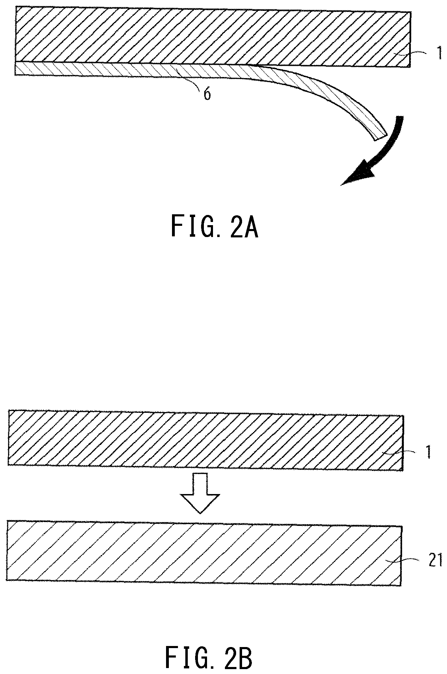

A structure 21 is a target member to which the structure protection sheet 1 according to the present invention is applied as shown in FIG 2B.

An example of the structure 21 is a structure made of concrete.

In general, the concrete is obtained by placement and curing of a cement composition containing at least an inorganic cementitious material, an aggregate, and an admixture. Such concrete is widely used in civil engineering structures, as exemplified by road bridges, tunnels, river management facilities such as sluice gates, sewer culverts, and quay walls. The present invention is especially advantageous in that when applied to the structure 21 made of concrete, the structure protection sheet 1 can conform to cracks or bulges of the concrete, prevent penetration of deterioration factors such as water and chloride ions into the concrete, and allow the concrete to discharge moisture in the form of water vapor.

### (Polymer-Cement Hardened Layer)

As shown in FIGS. 1 and 2, the polymer-cement hardened layer 2 is placed to face the structure 21 across the bonding layer 5. The polymer-cement hardened layer 2 may be a single layer of coat as shown in FIG 1A or may be a multilayer made up of at least two coats as shown in FIG 1B. Whether the polymer-cement hardened layer 2 is formed as a single layer or a multilayer can be freely chosen in view of factors such as the overall thickness, the properties to be imparted (such as conformability and adhesive performance to the structure), the factory production line, and the production cost. For example, in the case where the production line is too short for a single layer to have a given thickness, the polymer-cement hardened layer 2 can be formed by applying two or more coats. For example, in the case of applying two coats, drying of the first coat is followed by formation of the second coat.

The polymer-cement hardened layer 2 may be a stack of layers with different characteristics. For example, the stack may include a layer having a high percentage of resin component as a layer adjacent to the resin layer 3; in such a case, the layer having a high percentage of resin component adheres to the resin layer, while a layer having a high percentage of cement component adheres to the concrete structure. This ensures very high adhesive performance to both the resin layer and the concrete structure.

The polymer-cement hardened layer 2 preferably contains a cement component and a resin. Specifically, a resin (resin component) containing a cement component is prepared in the form of a coating material, and the coating material is applied to obtain the polymer-cement hardened layer 2.

Examples of the cement component include various types of cement, limestone materials containing a component made of calcium oxide, and clay materials containing silicon dioxide. Among these, cement is preferred. Examples of the cement include Portland cement, alumina cement, high-early-strength cement, and fly ash cement. The choice of which cement to use depends on the properties required of the polymer-cement hardened layer 2 and is made, for example, in view of the level of conformability to the concrete structure 21. Particularly preferred concrete is Portland cement as specified in JIS R 5210.

Examples of the resin component include acrylic resins, acrylic-urethane resins, acrylic-silicone resins, fluororesins, flexible epoxy resins, polybutadiene rubber, and acrylic resins having rubber properties (such as synthetic rubber containing an acrylic acid ester as a main component). The resin component is preferably the same as that of the resin layer 3 described later in order to enhance the adhesion between the polymer-cement hardened layer 2 and the resin layer 3.

The resin component used may be a thermoplastic resin, a thermosetting resin, or a photocurable resin. The word "hardened" in the term "polymer-cement hardened layer 2" is not intended to limit the resin component to a resin such as a thermosetting or photocurable resin which hardens through polymerization but intended to imply that any material may be used which hardens when finally formed into a layer.

The content of the resin component may be adjusted as appropriate depending on factors such as the material used. The content of the resin component is preferably from 10 to 40% by weight based on the total amount of the cement component and the resin component. If the content of the resin component is less than 10% by weight, the polymer-cement hardened layer 2 tends to have low adhesive performance to the resin layer 3 or tends to have difficulty maintaining the form of a layer. If the content of the resin component is more than 40% by weight, the polymer-cement hardened layer 2 could have insufficient adhesive performance to the concrete structure 21. In view of the above facts, the content of the resin component is more preferably from 15 to 35% by weight and even more preferably from 20 to 30% by weight.

The coating material for forming the polymer-cement hardened layer 2 is a coating solution prepared by mixing the cement component and the resin component in a solvent. The resin component is preferably an emulsion. One example is an acrylic emulsion containing fine polymer particles resulting from emulsion polymerization of a monomer such as an acrylic acid ester by means of an emulsifier. A preferred example of the acrylic emulsion is an acrylic acid polymer emulsion resulting from polymerization in which a monomer or monomer mixture containing one or more acrylic acid esters or methacrylic acid esters is polymerized in water containing an added surfactant.

The content of the acrylic acid ester or the like for forming the acrylic emulsion is not limited to a particular value but selected in the range of 20 to 100% by mass. The amount of the surfactant to be added is selected as necessary and not limited to a particular value. The surfactant is added in an amount sufficient to produce the emulsion.

The polymer-cement hardened layer 2 can be formed by applying the coating solution onto a release sheet and drying the applied solution to remove the solvent (preferably, water). For example, a composition prepared by mixing the cement component and the acrylic emulsion is used as the coating solution to form the polymer-cement hardened layer 2. After formation of the polymer-cement hardened layer 2 on the release sheet, the resin layer 3 may be formed on the polymer-cement hardened layer 2. Alternatively, the resin layer 3 may be first formed on the release sheet, and then the polymer-cement hardened layer 2 may be formed on the resin layer 3. In the case where the structure protection sheet 1 of the present invention is decorated, for example, the structure protection sheet 1 may be produced by a method including: subjecting a release sheet to embossing or matting (formation of a textured pattern); forming the resin layer 3 (which may be a single layer or a multilayer consisting of two or more layers) first and then the polymer-cement hardened layer 2 (which may be a single layer or a multilayer consisting of two or more layers) on the release sheet; and decorating the resin layer 3.

The thickness of the polymer-cement hardened layer 2 is not limited to a particular value and is freely chosen depending on factors such as the type, the degree of aging, and the shape, of the structure 21 (examples of the type of the structure 21 include: civil engineering structures as exemplified by a road bridge, a tunnel, a river management facility such as a sluice gate, a sewer culvert, a quay wall, a bridge, a railing, an expressway side wall, a sewer pipe (an inner surface, an outer surface, or a coupling), a sewage facility (a sewage treatment plant or a sewage canal), an underwater facility, a tunnel for wiring in a seaside area, a dam discharge channel, and a manhole inner wall; and architectural structures such as a concrete roof, a corrugated metal roof, a concrete rooftop, an architectural pipe, an ALC panel, an indoor flooring, and an inner or outer surface of a chimney). Specifically, for example, the thickness of the polymer-cement hardened layer 2 may be in the range of 0.5 to 1.5 mm. For example, when the thickness of the polymer-cement hardened layer 2 is 1 mm, the thickness variation is preferably within ±100 µm. Such a high thickness accuracy cannot be achieved by coating work at the worksite, but can be achieved by a stable coating process on a factory production line. Even when the thickness is greater than 1 mm, the thickness variation can be controlled within ±100 µm. When the thickness is less than 1 mm, the thickness variation can be further reduced.

The presence of the cement component in the polymer-cement hardened layer 2 allows water vapor to easily pass through the polymer-cement hardened layer 2. The water vapor transmission rate of the polymer-cement hardened layer 2 is, for example, from about 20 to 60 g/m²•day. Furthermore, the cement component is well compatible, for example, with the cement component of concrete and can offer high adhesion to the concrete surface. Additionally, as shown in FIG 1, the structure protection sheet 1 according to the present invention includes the bonding layer 5, to which the polymer-cement hardened layer 2 containing the cement component strongly adheres. Moreover, the polymer-cement hardened layer 2 is stretchable and thus can conform to a change in concrete in the event that the structure 21 cracks or bulges.

### (Mesh Layer)

The structure protection sheet according to the present invention preferably further includes a mesh layer.

When the structure protection sheet according to the present invention is used to repair a large-sized concrete structure such as a civil engineering structure examples of which include a road bridge, a tunnel, a river management facility such as a sluice gate, a sewer culvert, and a quay wall, the structure protection sheet itself is required to have sufficient strength properties (the term "strength properties" is intended to include tensile strength, flexural strength, hardness, surface strength, punching strength, toughness, etc., and the same applies hereinafter). The inclusion of the mesh layer enables the structure protection sheet according to the present invention to have strength properties sufficient for repair of the large-sized concrete structure as mentioned above.

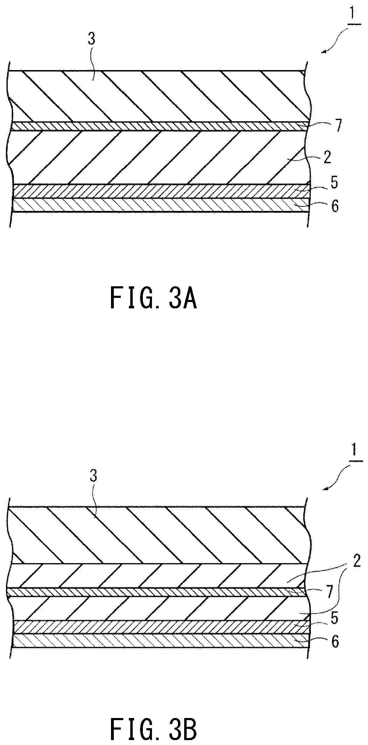

As shown in FIG 3A, the structure protection sheet 1 according to the present invention preferably includes a mesh layer 7 at the interface between the polymer-cement hardened layer 2 and the resin layer 3 in order to achieve a high bond strength.

The bond strength can be determined as follows: the polymer-cement hardened layer 2 of the structure protection sheet 1 according to the present invention is attached to a concrete surface via the bonding layer 5, a tensile jig is secured to the surface of the resin layer 3 and pulled in a direction away from the concrete at a rate of 1500 n/min, and the tensile load at which delamination occurs is measured as the bond strength.

As shown in FIG 3B, the mesh layer 7 may be located within the polymer-cement hardened layer 2. The mesh layer 7 may be located on one side of the polymer-cement hardened layer 2 that is not in contact with the resin layer 3, but is preferably buried within the polymer-cement hardened layer 2. Burying the mesh layer 7 within the polymer-cement hardened layer 2 increases the area of contact between the mesh layer 7 and the polymer-cement hardened layer 2, thus making it easier to achieve a high adhesive strength between the mesh layer 7 and the polymer-cement hardened layer 2 and ensure the strength of the polymer-cement hardened layer 2 as a whole. If the mesh layer 7 is not buried within the polymer-cement hardened layer 2, delamination is more likely to occur at the interface between the mesh layer 7 and the polymer-cement hardened layer 2.

In the case where the mesh layer 7 lies within the polymer-cement hardened layer 2, the mesh layer 7 may be located in the middle of the thickness of the polymer-cement hardened layer 2, but is preferably located toward the resin layer 3. When the mesh layer 7 is located within the polymer-cement hardened layer 2 and toward the resin layer 3, the bond force is increased by 1.3 times on average.

In the present invention, the mesh layer 7 is preferably impregnated with a material contained in the polymer-cement hardened layer 2 (the material is, for example, the cement component or resin component).

The state where the mesh layer 7 is impregnated with a material contained in the polymer-cement hardened layer 2 refers to a state where the material contained in the polymer-cement hardened layer 2 fills gaps between fibers forming the mesh layer 7. This impregnated state makes it easier to achieve a very high adhesive strength between the mesh layer 7 and the polymer-cement hardened layer 2. Additionally, the interaction between the mesh layer 7 and the material of the polymer-cement hardened layer 2 is likely to be enhanced, and the enhanced interaction makes it easier to further improve the strength properties of the structure protection sheet 1.

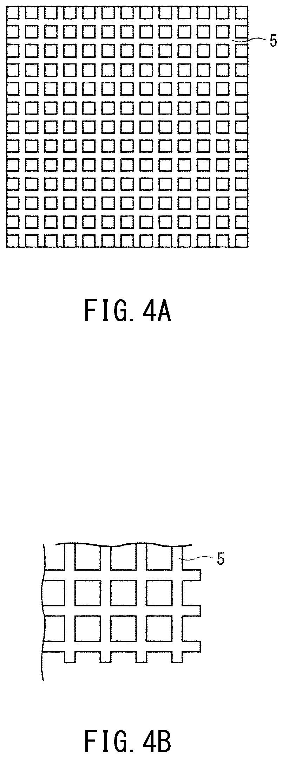

For example, the mesh layer 7 is constructed of warp and weft fibers arranged in a grid pattern as shown in FIG 4.

The fibers preferably include, for example, at least one type of fibers selected from the group consisting of polypropylene fibers, vinylon fibers, carbon fibers, aramid fibers, glass fibers, polyester fibers, polyethylene fibers, nylon fibers, and acrylic fibers. Among these fibers, polypropylene fibers and vinylon fibers can be suitably used.

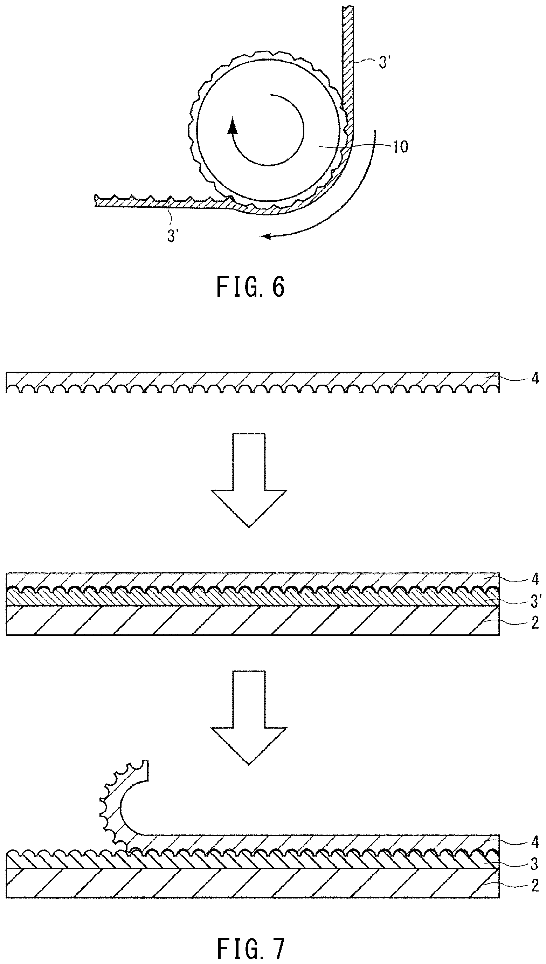

The mesh layer 7 is not limited to a particular form and may be in the form of a biaxial braided fabric as shown in FIG 6. Alternatively, any other form of mesh layer 7 such as a triaxial braided fabric may be used.

In the case where the mesh layer 7 is intended to prevent peeling off of concrete, a high-strength vinylon mesh for civil engineering or a vinylon or polyester cheesecloth for agriculture can be used as the mesh layer 7.

Desirably, the mesh layer 7 has a wire pitch of 50 to 1.2 mm (wire density = 0.2 to 8.0 wires/cm). If the wire pitch is less than 1.2 mm, the bond between the portions of the polymer-cement layer that are above and below the mesh layer could weaken, and the surface strength of the structure protection sheet 1 could be insufficient. If the wire pitch is more than 50 mm, the structure protection sheet 1 could have a reduced tensile strength although the surface strength of the structure protection sheet 1 is not adversely affected.

In the structure protection sheet 1 according to the present invention, there is a trade-off relationship between tensile strength and surface strength. The mesh layer 7 suitable for use in the present invention is one that has a wire pitch in the range of 50 to 1.2 mm.

The mesh layer 7 may be sized such that the mesh layer 7 as viewed from the upper side of the polymer-cement hardened layer 2 covers the entire polymer-cement hardened layer 2, or may be smaller in size than the polymer-cement hardened layer 2.

That is, the area of the mesh layer 7 as viewed in plan may be equal to or smaller than the area of the polymer-cement hardened layer 2 as viewed in plan. The plan view area of the mesh layer 7 is preferably from 60 to 95% of the plan view area of the polymer-cement hardened layer 2. If the percentage is less than 60%, the strength properties of the structure protection sheet according to the present invention could be insufficient or vary from region to region in the structure protection sheet. If the percentage is more than 95% and two polymer-cement hardened layers 2 are placed on top of each other with the mesh layer 7 interposed therebetween, the adhesive strength between the polymer-cement hardened layers 2 could be low, and the low adhesive strength increases the risk that delamination will occur between the two polymer-cement hardened layers 2 when the structure protection sheet according to the present invention is attached to a structure. The plan view areas of the mesh layer 7 and other layers can be measured by a known method.

### (Resin Layer)

As shown in FIGS. 1 and 2, the resin layer 3 is located opposite from the structure 21 and forms the outermost surface. The resin layer 3 may be a single layer as shown in FIG 1A or may be a multilayer made up of at least two layers as shown in FIG 1B. Whether the resin layer 3 is formed as a single layer or a multilayer can be freely chosen in view of factors such as the overall thickness, the properties to be imparted (such as waterproof performance, salt penetration resistance, anti-neutralization ability, and water vapor permeability), the length of the factory production line, and the production cost. For example, in the case where the production line is too short for a single layer to have a given thickness, the resin layer 3 can be formed by applying two or more coats. In the case of applying two coats, drying of the first coat is followed by application of the second coat. The applied second coat is then dried.

The resin layer 3 is obtained by applying a coating material formable into a resin layer that has flexibility, can conform to cracks or fissures of concrete, and is excellent in waterproof performance, salt penetration resistance, anti-neutralization ability, and water vapor permeability. Examples of the resin contained in the resin layer 3 include acrylic resins having rubber properties (such as synthetic rubber containing an acrylic acid ester as a main component), acrylic-urethane resins, acrylic-silicone resins, fluororesins, flexible epoxy resins, and polybutadiene rubber. The resin material is preferably the same as the resin component contained in the polymer-cement hardened layer 2. The resin material is particularly preferably a resin containing an elastic film-forming component such as rubber.

When an acrylic resin having rubber properties is used, the acrylic resin is preferably in the form of an aqueous emulsion containing an acrylic rubber copolymer because such an emulsion is excellent in safety and ease of application. The percentage of the acrylic rubber copolymer in the emulsion is, for example, from 30 to 70% by mass. The acrylic rubber copolymer emulsion can be obtained, for example, by emulsion polymerization of monomers in the presence of a surfactant. The surfactant used may be anionic, non-ionic, or cationic.

In the structure protection sheet according to the present invention, the resin layer 3 is preferably made using a resin that exhibits a high water vapor transmission rate. The inclusion of the resin layer 3 made of such a resin enables the structure protection sheet according to the present invention to have a water vapor transmission rate falling within the range as previously mentioned.

The coating material for forming the resin layer 3 is a coating solution prepared by mixing a resin composition and a solvent. The coating solution is applied onto a release sheet and then dried to remove the solvent and thus form the resin layer 3. The solvent may be water or an aqueous solvent or may be an organic solvent such as xylene or mineral spirit. In Examples described later, an aqueous solvent is used, and the resin layer 3 is made with an acrylic rubber composition. The layer formation on the release sheet is not limited to a particular order of layers. For example, as described above, the resin layer 3 may be formed first and then the polymer-cement hardened layer 2 may be formed. Alternatively, the polymer-cement hardened layer 2 may be formed first and then the resin layer 3 may be formed.

The thickness of the resin layer 3 is freely chosen depending on factors such as the type, the degree of aging, and the shape, of the structure 21 (examples of the type of the structure 21 include civil engineering structures as exemplified by a road bridge, a tunnel, a river management facility such as a sluice gate, a sewer culvert, and a quay wall). For example, the thickness of the resin layer 3 is preferably in the range of 50 to 150 µm and the thickness variation is preferably within ±50 µm. Such a thickness accuracy cannot be achieved by coating work at the worksite, but can be reliably achieved on a factory production line.

The resin layer 3 has high waterproof performance, salt penetration resistance, and anti-neutralization ability and is preferably permeable to water vapor. The water vapor transmission rate of the resin layer 3 is desirably adjusted as appropriate such that, for example, the water vapor transmission rate of the structure protection sheet 1 according to the present invention falls within the range of 10 to 50 g/m²•day. In this case, the structure protection sheet 1 can have high waterproof performance, salt penetration resistance, and anti-neutralization ability and further have a certain level of water vapor permeability. When the resin layer 3 is made of a resin component identical to that of the polymer-cement hardened layer 2, the resin layer 3 can be well compatible with, and have high adhesion to, the polymer-cement hardened layer 2. The water vapor permeability is measured according to JIS Z 0208 "Testing Methods for Determination of the Water Vapour Transmission Rate of Moisture-Proof Packaging Materials".

The resin layer 3 may contain a pigment in order to increase the variety of colors that the structure protection sheet 1 according to the present invention can have.

The resin layer 3 may contain an inorganic substance. The resin layer 3 containing an inorganic substance can be scuff-resistant. The inorganic substance is not limited to a particular type, and examples of the inorganic substance include hitherto known materials such as particles of metal oxides such as silica, alumina, and titania.

For the structure protection sheet according to the present invention, a contaminant removal percentage is preferably 95% or more. The contaminant removal percentage is determined as follows: the surface of the resin layer 3 that is opposite from the polymer-cement hardened layer 2 is soiled with a carbon particle-containing oil, then the structure protection sheet is placed in a vertical position, and the soiled surface is cleaned with a substantially horizontal jet of tap water emitted from a horse whose tip is at a distance of about 2 meters from the soiled surface. When the resin layer 3 has such high surface cleanability, the structure protection sheet can be used as a very suitable repair sheet for a structure such as an expressway wall or a tunnel wall to which contaminants easily attach. If the contaminant removal percentage is less than 95%, the antifouling performance of the structure protection sheet is insufficient, and an expressway wall or a tunnel wall with the structure protection sheet attached thereto is likely to give a sensory impression that the wall is dirty. The contaminant removal percentage is preferably as high as possible but usually 98% or less.

The structure protection sheet 1 according to the present invention which exhibits a high contaminant removal percentage as described above can be obtained, for example, by making the resin layer with a resin material such as an acrylic-silicone resin that permits easy removal of contaminants or by having the resin layer contain a material (an antifoulant) such as a silicone resin or particulate silicone that allows for easy removal of contaminants.

The antifouling performance in the present invention can be evaluated by a method described in Examples below.

The resin layer 3 may contain additives that can impart various properties to the resin layer 3. Examples of the additives include cellulose nanofibers.

### [Decoration Process]

In the structure protection sheet according to the present invention, one side of the resin layer 3 is preferably decorated. The "one side" refers to the side adjacent to the polymer-cement hardened layer 2 or the opposite side. The decoration is preferably accomplished by forming a textured pattern or by printing. The decoration is not limited to using a particular process, and examples of processes that can be suitably used include embossing, matting (delustering), mirror finishing (lustering), and printing performed on the surface of the resin layer.

The embossing is a process for forming a desired textured pattern on the surface of the resin layer 3. An exemplary method for the embossing includes: delivering an unhardened resin layer 3' to an embossing roll 10 as shown in FIG 6 which has a roll surface with a pattern of projections and depressions corresponding to the textured pattern to be formed; pressing the surface of the unhardened resin layer 3' against the embossing roll 10 to transfer the pattern of projections and recesses of the embossing roll 10 onto the surface of the unhardened resin layer 3'; and then hardening the resin layer 3' into the resin layer 3.

The projections and depressions of the embossing roll are not limited to a particular pattern, and any pattern may be chosen as appropriate depending on the desired decorative design.

The other conditions in the embossing may be those employed in hitherto known embossing of resin films.

The method for forming a textured pattern on the surface of the resin layer 3 is not limited to embossing, and any other method may be used. The textured pattern formation can be accomplished by a process called matting which is analogous to embossing.

For example, as shown in FIG 7, a pattern of dimples (hemispheres) with a depth of about 1 micron is formed on a release sheet 4, the unhardened resin layer 3' is applied onto the dimples, and then the resin of the resin layer 3' is hardened. The polymer-cement hardened layer 2 is placed on the hardened resin layer, and then the release sheet 4 is separated. In this way, a structure protection sheet can be obtained which includes the resin layer 3 whose surface has a matte pattern.

The method for printing on the surface of the resin layer 3 is not limited to using particular means. For example, the printing may be performed using an ink prepared by blending a solvent, a binder resin (such as a urethane, acrylic, nitrocellulose, or rubber resin), various pigments, an extender pigment, and additives (such as a plasticizer, a desiccant, and a stabilizer).

The design to be printed is not limited to a particular type, and a letter, a pictorial pattern, or any other design may be selected as appropriate depending on the decorative design to be provided to the structure.

Examples of the ink printing method include known printing methods such as offset printing, gravure printing, flexographic printing, silk-screen printing, and inkjet printing.

To enhance the adhesion of the ink to the resin layer 3, the resin layer 3 may be subjected to a surface treatment such as corona treatment or ozone treatment before the ink printing.

The structure protection sheet of the present invention can be formed, for example, by forming a textured surface having an embossed pattern or a matte pattern on the surface of a release sheet, printing a decorative design on the textured surface, and placing the resin layer and then the polymer-cement layer on the textured surface.

It is also preferable to interpose a transparent resin layer such as a layer of acrylic-silicone resin at the interface between the release sheet and the textured surface.

In this case, the transparent resin layer such as a layer of acrylic-silicone resin lies on the outermost surface of the structure protection sheet protecting the structure and makes a significant contribution to improvement in weathering resistance.

The decoration described above may be performed on at least one side of the resin layer 3. For example, in the case where the resin layer 3 is decorated on both the side adjacent to the polymer-cement hardened layer 2 and the opposite side (the side forming the outermost surface of the structure protection sheet 1 or the side contacting the release sheet 4), a more preferred decorative design can be created; in particular, when textured patterns are formed on both sides of the resin layer 3 by a process such as embossing, a decorative design with a three-dimensional effect can be created.

In the case where the resin layer 3 is decorated on the side adjacent to the polymer-cement hardened layer 2, the created decorative design can maintain a good decorative effect over a long period of time since the decorative design does not directly contact outside air. In the case where the resin layer 3 is embossed on the side adjacent to the polymer-cement hardened layer 2, the outer surface of the resin layer 3 can be made flat while a three-dimensional decorative design is created. In this case, the resin layer 3 may be transparent or semi-transparent.

In the structure protection sheet 1 according to the present invention, it is also preferable to form a printed layer on the side of the resin layer 3 that is adjacent to the polymer-cement hardened layer 2 and form a textured pattern on the opposite side of the resin layer 3 by a process such as embossing. A good decorative effect can be achieved by the printed layer, and at the same time a three-dimensional effect can be achieved by the textured pattern formed by embossing. Additionally, the textured pattern can offer properties such as antiglare performance, sound insulation performance, and antifouling performance.

As shown in FIG 1, the structure protection sheet 1 produced may include a release sheet 4 on the side of the resin layer 3 opposite from the polymer-cement hardened layer 2. The release sheet 4 can protect the surface of the structure protection sheet 1, for example, during transportation to the worksite. At the worksite, the structure protection sheet 1 with the release sheet 4 is bonded onto the structure 21 to be protected (or onto an undercoat layer 22 or a bonding layer 23 located on the structure 21), and then the release sheet 4 is separated. This significantly improves the work efficiency at the worksite. The release sheet 4 is preferably processing paper used in the production process of the structure protection sheet 1.

The processing paper used as the release sheet 4 is not limited to being made of a particular material and may be any hitherto known processing paper used in production processes. Preferred examples other than hitherto known processing paper include laminated paper having a layer of olefin resin such as polypropylene or polyethylene or a layer containing silicone. The release sheet 4 is not limited to having a particular thickness and may have any thickness that does not impair handleability during production and use. For example, the thickness of the release sheet 4 may be in the range of about 50 to 500 µm.

### (Bonding Layer)

The structure protection sheet 1 according to the present invention includes the bonding layer 5 on the side of the polymer-cement hardened layer 2 opposite from the resin layer 3 (the side that faces the structure 21).

The presence of the bonding layer 5 on the surface of the polymer-cement hardened layer 2 eliminates the need to apply an adhesive and form an adhesive layer at the worksite when the structure protection sheet 1 according to the present invention is attached to the structure 21. This leads to very high work efficiency and also makes it possible to attach the structure protection sheet 1 according to the present invention to the structure 21 via a bonding layer having a uniform thickness without relying on the skill of a well-trained worker. Additionally, when the surface of the structure 21 has small depressions, a pressure-sensitive adhesive layer formed as the bonding layer 5 can be placed into the depressions to enhance the adhesion of the structure protection sheet 1 according to the present invention to the structure 21.

The bonding layer 5 may be a pressure-sensitive adhesive layer made using a pressure-sensitive adhesive or an adhesive layer made using an adhesive. In view of the pot life of the bonding layer 5, the bonding layer 5 is preferably a pressure-sensitive adhesive layer.

The pressure-sensitive adhesive is not limited to a particular type, and examples of the pressure-sensitive adhesive include known pressure-sensitive adhesives such as acrylic pressure-sensitive adhesives, silicone pressure-sensitive adhesives, urethane pressure-sensitive adhesives, and rubber pressure-sensitive adhesives. In the present invention, the bonding layer 5 is preferably made of an acrylic pressure-sensitive adhesive. An acrylic pressure-sensitive adhesive allows for easy adjustment of the pressure-sensitive adhesive force to the structure 21 and high flexibility in material design and is excellent in transparency, weathering resistance, and heat resistance. Thus, the use of an acrylic pressure-sensitive adhesive enables the structure protection sheet 1 according to the present invention to more successfully protect the structure 21.

The acrylic pressure-sensitive adhesive used is not limited to a particular product and may be a commercially-available product, examples of which include ORIBAIN^{™} 6574 (manufactured by Toyochem Co., Ltd.).

The weight per unit area of the bonding layer 5 made using the acrylic pressure-sensitive adhesive (this bonding layer may be referred to as "pressure-sensitive adhesive layer" hereinafter) is preferably from 20 to 250 g/m² because in this case the pressure-sensitive adhesive layer can exhibit a satisfactory bond force to the surface of the structure 21 such as a concrete structure.

The structure protection sheet 1 according to the present invention preferably has a bond force of 0.5 N/mm² or more when attached to the surface of the structure 21 via the pressure-sensitive adhesive layer. If the bond force is less than 0.5 N/mm², the adhesion of the structure protection sheet 1 according to the present invention to the surface of the structure 21 could be unsatisfactory.

In the case where the bonding layer 5 of the structure protection sheet 1 according to the present invention is an adhesive layer made using an adhesive, the adhesive is not limited to a particular type, and examples of the adhesive include known adhesives such as ultraviolet-curable adhesives and thermosetting adhesives.

Examples of such adhesives include urethane adhesives, epoxy adhesives, and adhesives made with acrylic resins having rubber properties (such as synthetic rubber containing an acrylic acid ester as a main component). Among these adhesives, an adhesive made of a resin component identical to the resin component of the polymer-cement hardened layer 2 of the structure protection sheet 1 is more preferred because such an adhesive exhibits a high adhesive strength to the polymer-cement hardened layer 2.

In the structure protection sheet 1 according to the present invention, the bonding layer 5 preferably contains a hardener. The bonding layer 5 containing the hardener exhibits an increased bond force to the structure 21 and enables the structure protection sheet 1 according to the present invention to have a high punching strength.

The structure protection sheet 1 according to the present invention preferably has a punching strength of 1.5 kN or more as measured by a punching test specified in JSCE-K 533. When the punching strength is 1.5 kN or more, the structure protection sheet 1 according to the present invention can successfully prevent problems such as peeling off of concrete or the like from the structure surface.

The hardener used is not limited to a particular type and may be any known hardener such as an isocyanate hardener, an amine hardener, an epoxy hardener, or a metal chelate hardener.

In the structure protection sheet 1 according to the present invention, the bonding layer 5 preferably has a gel fraction of 30 to 70% because in this case the structure protection sheet 1 exhibits a strong bond force to the structure 21 and has a high punching strength. The gel fraction is more preferably at least 40% and at most 65%.

In the structure protection sheet 1 according to the present invention, the bonding layer 5 preferably has a thickness of 20 to 500 µm. If the thickness of the bonding layer 5 is less than 20 µm, the bond force of the structure protection sheet 1 according to the present invention to the structure 21 could be unsatisfactory. If the thickness of the bonding layer 5 is more than 500 µm, the thickness variation is likely to be large, and an excess portion of the adhesive could come out of an edge of the structure protection sheet 1 attached to the structure 21 when the surface of the attached structure protection sheet 1 is smoothed by means such as a roller. The thickness of the bonding layer 5 is more preferably at least 90 µm and at most 200 µm.

In the structure protection sheet 1 according to the present invention, as shown in FIG 1, a release film 6 is preferably attached to the side of the bonding layer 5 opposite from the polymer-cement hardened layer 2 in order to protect the surface of the bonding layer 5. The release film 6 is not limited to a particular type, and an example of the release film 6 is a film having a substrate layer and a release layer.

Examples of the material forming the substrate layer include: polyesters such as polyethylene terephthalate and polyethylene naphthalate; polyolefins such as polyethylene, polypropylene, and polymethylpentene; polyamides such as nylon 6; vinyl resins such as polyvinyl chloride; acrylic resins such as polymethylmethacrylate; cellulose resins such as cellulose acetate; and synthetic resins such as polycarbonate. The substrate layer may be formed using paper as a main component. The substrate layer may be a stack of two or more layers.

Examples of the material forming the release layer include silicone resins, melamine resins, and fluorinated polymers. The release layer can be formed by a coating process in which a coating solution containing the material forming the release layer and an organic solvent is applied onto the substrate layer by a known technique such as gravure coating, roll coating, comma coating, or lip coating and then a layer of the applied coating solution is dried and hardened. Before the release layer is formed on the surface of the substrate layer, the surface of the substrate layer may be subjected to corona treatment or adhesion-enhancing treatment.

The structure protection sheet 1 described above permits discharge of moisture from a structure such as a concrete structure and can protect the concrete structure 21 over a long period of time. In particular, the structure protection sheet 1 can have properties tailored to the characteristics of the concrete structure 21. Specifically, the structure protection sheet 1 is adapted to conform to cracks or bulges of the concrete structure 21, prevent penetration of deterioration factors such as water and chloride ions into the concrete structure 21, and exhibit permeability high enough to permit discharge of deterioration factors from the concrete structure 21. The structure protection sheet 1 is producible in a factory and can be mass-produced while ensuring high quality and stable properties. Thus, the structure protection sheet 1 can be used regardless of the skill of the worker and allow for shortening of the work period and reduction in the labor cost.

The structure protection sheet according to the present invention can be used not only for the above-described surface reinforcement of civil engineering structures as exemplified by road bridges, tunnels, river management facilities such as sluice gates, sewer culverts, quay walls, bridges, and railings but also for various other purposes and can achieve various other effects. Specifically, for example, the structure protection sheet can be: attached to a metal roof such as a corrugated metal roof to offer metal corrosion protection; attached to an architectural pipe or the like to reinforce the surface of the pipe or the like; attached to an ALC panel of a factory building or the like to reduce deterioration or make a repair; attached to an expressway side wall to offer antifouling performance, prevent light reflection attributed to the surface morphology of the expressway side wall, or present some information; attached to a sewer pipe (an inner surface, an outer surface, or a coupling) to offer sulfuric acid resistance; attached to a sewage facility (a sewage treatment plant or a sewage canal) to offer sulfuric acid resistance; attached to an indoor or outdoor flooring or a concrete rooftop to increase the strength of the flooring or rooftop; attached to an underwater facility to increase the durability of the facility; attached to a tunnel for wiring in a seaside area to reinforce the surface of the tunnel; attached to a dam discharge channel to prevent deterioration or repair a deteriorated part; attached to a civil engineering structure such as a manhole inner wall, to a building part such as a concrete roof, a concrete rooftop, an indoor flooring made of stone or resin, or an inner or outer surface of a chimney, or to a housing-related material to prevent moss growth or fungus growth; attached to an inner or outer surface of a chimney to reinforce the surface; or attached to a manhole inner wall to prevent deterioration or make a repair.

The structure protection sheet according to the present invention may be modified by adding polyrotaxane, or the surface strength of the structure protection sheet may be increased by adding a resin composition or resin particles.

### [Method for Producing Structure Using Structure Protection Sheet]

A method for producing a reinforced structure using a structure protection sheet according to the present invention is a method in which the above-described structure protection sheet 1 according to the present invention is used as shown in FIG 2. The method includes attaching the structure protection sheet 1 to the surface of the structure 21 via the bonding layer 5. In the case where the release film 6 is located on the surface of the bonding layer 5, the release film 6 is separated to uncover the bonding layer 5 as shown in FIG 2A, and then the structure protection sheet 1 is attached to the structure 21 as shown in FIG 2B, with the bonding layer 5 in contact with the structure 21.

In this method, the structure protection sheet 1 can be easily attached to the surface of the structure 21. Thus, the structure protection sheet 1 made up of layers with a small thickness variation can be placed on the structure 21 even by a worker who is not well-trained. This allows for significant shortening of the work period and long-term protection of the structure 21.

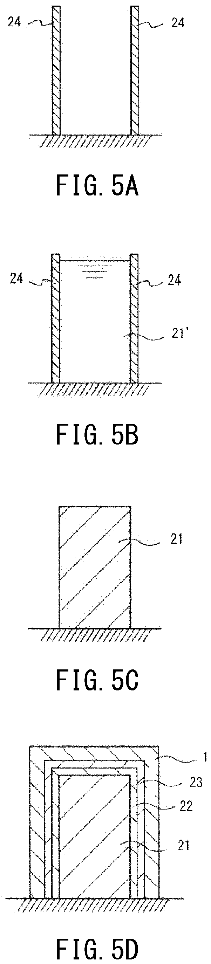

FIG 5 illustrates an example where the structure protection sheet 1 is used in a cast-in-place method. The cast-in-place method is a method in which a mold 24 is formed at the worksite, a concrete composition 21' is poured into the mold 24, and the poured concrete composition 21' is left to harden to obtain the concrete structure 21. In the cast-in-place method, the formation of the hardened concrete structure 21 is followed by attachment of the structure protection sheet 1 to the surface of the concrete structure 21, and thus the structure 21 can be made resistant to deterioration. After the attachment of the structure protection sheet 1 to the structure 21, the structure protection sheet 1 is usually left to stand to dry and harden the bonding layer 5 to bond the structure protection sheet 1 to the structure 21.

In the case where the structure 21 has already suffered from a defect such as a crack, the defective part is repaired first, and then the structure protection sheet 1 is attached by the method as described above. This can extend the service life of the concrete structure 21.

A primer layer containing a hardenable resin material may be formed on the surface of the structure 21.

The hardenable resin material is not limited to a particular type and may be any material that hardens into a resin through thermal hardening, photohardening, or any other process. Preferred examples of the hardenable resin material include epoxy compounds. When the hardenable resin material is an epoxy compound, a hardened primer layer resulting from hardening of the primer layer is an epoxy hardened material. The epoxy hardened material is typically produced by hardening an epoxy compound having two or more epoxy groups by means of a hardener. The following will describe an example where such an epoxy hardened material is used as the primer layer.

Examples of the epoxy compound include bisphenol A epoxy resins, bisphenol F epoxy resins, bisphenol S epoxy resins, o-cresol novolac epoxy resins, alicyclic epoxy resins, aliphatic epoxy resins, diglycidyl ethers of phenols, and diglycidyl ethers of alcohols.

Examples of the hardener include polyfunctional phenols, amines, polyamines, mercaptans, imidazoles, acid anhydrides, and phosphorus-containing compounds. Examples of the polyfunctional phenols include: monocyclic difunctional phenols such as hydroquinone, resorcinol, and catechol; polycyclic difunctional phenols such as bisphenol A, bisphenol F, naphthalene diols, and biphenols; halides of the monocyclic or polycyclic difunctional phenols; and the monocyclic or polycyclic difunctional phenols substituted with an alkyl group. Novolacs or resols which are polycondensation products of the above phenols and aldehydes can also be used. Examples of the amines include aliphatic or aromatic primary, secondary, and tertiary amines, quaternary ammonium salts, alicyclic amines, guanidines, and urea derivatives.

The material (including the hardenable resin material) of the primer layer may be a combination of the compounds mentioned above as examples and may be an epoxy resin primer containing, for example, a bisphenol A or bisphenol F epoxy as a main component and a polyamine or mercaptan as a hardener. The epoxy resin primer may contain, for example, a coupling agent, a viscosity modifier, a hardening accelerator etc. in addition to the main component and the hardener. Such a primer used to form the primer layer may be, for example, a two-part reaction-hardenable aqueous epoxy resin emulsion manufactured by TOAGOSEI Co., Ltd. under the trade name "Aron Bullcoat P-300" ("Aron Bullcoat" is the registered trademark of TOAGOSEI Co., Ltd.).

The primer layer is typically used as an undercoat material for the structure 21. The primer layer may be formed by applying an undercoat material such as a solvent-based epoxy resin solution, an epoxy resin emulsion, another common emulsion, or a pressure-sensitive adhesive to the surface of the structure 21. In this case, the application of the undercoat material can be accomplished by a common method. For example, the undercoat material is applied to the surface of the structure 21, which is to be prevented from deterioration, by means such as a brush or roller or by a common technique such as spraying with a spray gun, and thus a layer of the undercoat material is formed on the surface of the structure 21.

The thickness of the primer layer is not limited to a particular value. Preferably, the thickness of the primer layer in a wet state is in the range of 50 to 300 µm. When the thickness of the wet primer layer is 50 µm or more, the final thickness of the primer layer can be easily made uniform in view of infiltration of the material of the primer layer into the structure 21 such as a concrete structure, and satisfactory adhesive performance between the structure and the structure protection sheet 1 can be easily ensured. The upper limit of the thickness of the primer layer is not limited to a particular value. In order to improve the ease of application, minimize misalignment between the layers to be bonded together, and optimize the amount of the material used, the thickness of the primer layer is preferably 300 µm or less. The primer layer formed as an undercoat layer on the structure 21 acts to enhance the adhesion between the structure 21 and the structure protection sheet 1. When the thickness of the primer layer is in the above range, the structure protection sheet 1 is more likely to reinforce and protect the structure 21 reliably over a long period of time.

In the case where the structure 21 has a crack or any other defect, it is preferable to repair the crack or defect before application of the primer layer and then form the primer layer. The method for the repair is not limited to using particular means, and the repair is usually done using a material such as cement mortar or an epoxy resin.

### Examples

The present invention will be descried in more detail by Examples, Comparative Example, and Reference Examples.

### [Example 1]

PP-laminated paper with a thickness of 130 µm was used as a release sheet 4. An acrylic resin-containing composition for resin layer formation was applied onto the release sheet 4 and dried to form a single-layered resin layer 3 with a thickness of 100 µm. After that, a composition for polymer-cement hardened layer formation was applied onto the resin layer 3 and dried to form a single-layered polymer-cement hardened layer 2 with a thickness of 1.00 mm.

A pressure-sensitive adhesive liquid mixture having a gel fraction of 57% was prepared by mixing 100 parts by mass of an acrylic pressure-sensitive adhesive (ORIBAIN^{™} 6574 manufactured by Toyochem Co., Ltd.) with 6 parts by mass of an isocyanate hardener (BHS 8515 manufactured by Toyochem Co., Ltd.). The pressure-sensitive adhesive liquid mixture was applied to the surface of the polymer-cement hardened layer 2 and dried to form a bonding layer 5 (pressure-sensitive adhesive layer) with a thickness of 200 µm.

The resulting structure protection sheet 1 had a total thickness of 1300 µm.

The structure protection sheet 1 was produced continuously in a factory controlled at about 25°C and wound in a roll together with a release sheet.

The composition for polymer-cement hardened layer formation was an aqueous acrylic emulsion containing 45 parts by mass of a cement mixture. The cement mixture contained, at least, 70 ± 5 parts by mass of Portland cement, 10 ± 5 parts by mass of silicon dioxide, 2 ± 1 parts by mass of aluminum oxide, and 1 to 2 parts by mass of titanium oxide. The acrylic emulsion was prepared by emulsion polymerization of an acrylic acid ester monomer by means of an emulsifier and contained, at least, 53 ± 2 parts by mass of an acrylic acid polymer and 43 ± 2 parts by mass of water. The polymer-cement hardened layer 2, which was obtained by applying and drying the composition for polymer-cement hardened layer formation which was a mixture of the cement mixture and the acrylic emulsion, was a composite layer composed of an acrylic resin and 50% by mass of Portland cement contained in the acrylic resin. The composition for resin layer formation was an acrylic-silicone resin composition. The acrylic-silicone resin composition was an emulsion composition containing 60 parts by mass of an acrylic-silicone resin, 25 parts by mass of titanium dioxide, 10 parts by mass of ferric oxide, and 5 parts by mass of carbon black.

### [Example 2]

A structure protection sheet 1 was produced in the same manner as in Example 1, except for using a pressure-sensitive adhesive liquid mixture that was prepared by mixing 100 parts by mass of an acrylic pressure-sensitive adhesive (ORIBAIN^{™} 6574 manufactured by Toyochem Co., Ltd.) with 3 parts by mass of an isocyanate hardener (BHS 8515 manufactured by Toyochem Co., Ltd.) and that had a gel fraction of 46%.

### [Example 3]

PP-laminated paper with a thickness of 130 µm was used as a release sheet 4. An acrylic resin-containing composition for resin layer formation was applied onto the release sheet 4 and dried to form a single-layered resin layer 3 with a thickness of 100 µm. After that, a composition for polymer-cement hardened layer formation was applied onto the resin layer 3 and dried to form a single-layered polymer-cement hardened layer 2 with a thickness of 600 µm. Subsequently, a 150-mesh vinylon mesh layer was placed on the 600-µm-thick polymer-cement hardened layer 2, and the composition for polymer-cement hardened layer formation was applied onto the mesh layer and dried to form a single-layered polymer-cement hardened layer 2 with a thickness of 400 µm.

The subsequent steps were performed in the same manner as in Example 1 to produce a structure protection sheet 1.

### [Example 4]

PP-laminated paper with a thickness of 130 µm was used as a release sheet 4. An acrylic resin-containing composition for resin layer formation was applied onto the release sheet 4 and dried to form a single-layered resin layer 3 with a thickness of 100 µm. After that, a composition for polymer-cement hardened layer formation was applied onto the resin layer 3 and dried to form a single-layered polymer-cement hardened layer 2 with a thickness of 300 µm. A 510-mesh cheesecloth was then placed on the 300-µm-thick polymer-cement hardened layer 2.

The subsequent steps were performed in the same manner as in Example 1, except that the bonding layer 5 (pressure-sensitive adhesive layer) had a thickness of 100 µm. Thus, a structure protection sheet 1 was produced.

### [Comparative Example 1]

A structure protection sheet was produced in the same manner as in Example 1, except that the bonding layer 5 was not formed.

### [Reference Example 1]

A structure protection sheet was produced in the same manner as in Example 1, except that the amount of the hardener was adjusted such that the bonding layer 5 (pressure-sensitive adhesive layer) had a gel fraction of 30%.

### [Reference Example 2]

A structure protection sheet was produced in the same manner as in Example 1, except that the amount of the hardener was adjusted such that the bonding layer 5 (pressure-sensitive adhesive layer) had a gel fraction of 70%.

### [Reference Example 3]

A structure protection sheet was produced in the same manner as in Example 1, except that the bonding layer 5 had a thickness of 100 µm.

### [Reference Example 4]

A structure protection sheet was produced in the same manner as in Example 1, except that the bonding layer 5 had a thickness of 50 µm.

### [Reference Example 5]

A pressure-sensitive adhesive liquid mixture having a gel fraction of 57% was prepared by mixing 100 parts by mass of an acrylic pressure-sensitive adhesive (AST-8752 manufactured by Nippon Shokubai Co., Ltd.) with 6 parts by mass of an isocyanate hardener (Coronate L manufactured by Tosoh Corporation). Except for using this pressure-sensitive adhesive liquid mixture, a structure protection sheet was produced in the same manner as in Example 1.

### [Reference Example 6]

A structure protection sheet was produced in the same manner as in Example 1, except for using a butyl rubber pressure-sensitive adhesive (No. 5938 Super Butyl Tape (Double sided) manufactured by Maxell Sliontec Ltd.).

### [Reference Example 7]

A structure protection sheet was produced in the same manner as in Example 4, except that the bonding layer 5 (pressure-sensitive adhesive layer) had a thickness of 50 µm.

### [Bond Force]

The bond force of each of the structure protection sheets according to Examples 1, 3, and 4 and Reference Examples 1 to 7 was measured in accordance with JIS A 6909.

The structure protection sheet according to Comparative Example 1 was not evaluated for its bond force because this structure protection sheet did not include the bonding layer 5.

### • Preparation of Test Piece

(1) The test substrate used is a mortar plate (70 × 70 × 20 mm) as specified in JIS A 6909.
(2) The bonding layer 5 of the structure protection sheet produced is attached to the mortar plate, and the release sheet 4 is separated.

### • Test Method

The measurement is performed in accordance with JIS A 6909.

The specific procedures are as follows.
(1) An upper tensile jig is bonded to the surface of the resin layer 3 of the structure protection sheet by means of an adhesive and allowed to stand for 24 hours.
(2) After curing, the structure protection sheet is cut deep into the concrete substrate at the four sides of a 40 mm × 40 mm square centered at the jig.
(3) The test piece is mounted on a test machine by means of a lower tensile jig and a backing plate, then a vertical tensile force is applied to the test piece by the upper and lower tensile jigs, and the maximum tensile load T (N) is determined.
   The loading rate is 1500 n/min.
(4) The bond strength (N/mm²) is calculated as maximum tensile load T(N)/1600

### [Punching Strength]

Measurement was performed in accordance with JSCE-K 533.

The structure protection sheet according to Comparative Example 1 was not evaluated for its punching strength because this structure protection sheet did not include the bonding layer 5.

### • Preparation of Test Piece

(1) The test substrate used is a top cover-type U-shaped gutter (400 × 600 × 60 mm) as specified in Appendix E of JIS A 5372.
(2) A400 × 400 mm area of one surface of the test substrate is covered by the structure protection sheet.
(3) A hole with a diameter of about 100 mm and a depth of 55 ± 3.0 mm is formed at the center of the surface of the test substrate that is opposite to the covered surface.

### • Measurement Method

(1) The test piece is positioned such that the surface with the hole faces upward, and the test piece thus positioned is subjected to a load.
(2) The hole region is destroyed at a rate of 1 mm/min.
(3) After the destruction, the structure protection sheet is forcibly displaced at a loading rate of 5 mm/min.
(4) The loading is continued until the displacement reaches 50 mm, and the maximum load is determined as the punching strength.

### [Usability]

The usability of each structure protection sheet was evaluated in terms of simplicity of use. For a structure protection sheet the use of which required the step of applying an adhesive, the usability was rated "Poor". For a structure protection sheet usable without the step of applying an adhesive, the usability was rated "Good".

**[Table 1]**

| | Ex. 1 | Ex. 3 | Ex. 4 | Comp. 1 | Ref. 1 | Ref. 2 | Ref. 3 | Ref. 4 | Ref. 5 | Ref. 6 | Ref. 7 |
|---|---|---|---|---|---|---|---|---|---|---|---|
| Primer layer | Present | Present | Present | Absent | Absent | Absent | Absent | Absent | Absent | Absent | Present |
| Usability | Good | Good | Good | Poor | Good | Good | Good | Good | Good | Good | Poor |
| Bond force [N/mm²] | 1 | 1 | 1.1 | - | 0.6 | 0.4 | 0.2 | 0.1 | 0.3 | 0.21 | 1 |
| Punching strength [kN] | 2.1 | 2.5 | 1.5 | - | 0.9 | - | 0.8 | 0.5 | - | - | 0.7 |

### The present disclosure (1) is directed to a structure protection sheet to be attached to a surface of a structure, the structure protection sheet including, in order, a bonding layer, a polymer-cement hardened layer, and a resin layer.

The present disclosure (2) is directed to the structure protection sheet according to the present disclosure (1), wherein the bonding layer includes an acrylic pressure-sensitive adhesive.

The present disclosure (3) is directed to the structure protection sheet according to the present disclosure (1) or (2), wherein the structure protection sheet has a punching strength of 1.5 kN or more as measured by a punching test specified in JSCE-K 533.

The present disclosure (4) is directed to the structure protection sheet according to the present disclosure (1) or (2), wherein the structure protection sheet has a bond force of 0.5 N/mm² or more when attached to the surface of the structure via the bonding layer.

The present disclosure (5) is directed to the structure protection sheet according to the present disclosure (1), (2), (3), or (4), wherein the bonding layer has a thickness of 20 to 500 µm.

The present disclosure (6) is directed to the structure protection sheet according to the present disclosure (1), (2), (3), (4), or (5), wherein the polymer-cement hardened layer contains a cement component and a resin, and a content of the resin in the polymer-cement hardened layer is from 10 to 40% by weight.

The present disclosure (7) is directed to the structure protection sheet according to the present disclosure (1), (2), (3), (4), (5), or (6), further including a mesh layer.

The present disclosure(8) is directed to a method for producing a reinforced structure using the structure protection sheet according to the present disclosure (1), (2), (3), (4), (5), (6), or (7), the method including attaching the structure protection sheet to a surface of a structure via the bonding layer.

### Reference Signs List

- 1: structure protection sheet
- 2: polymer-cement hardened layer
- 3: resin layer
- 3': unhardened resin layer
- 4: release sheet
- 5: bonding layer
- 6: release film
- 7: mesh layer
- 10: embossing roll
- 21: structure (concrete)
- 21': concrete composition (composition for structure formation)
- 22: undercoat layer
- 23: adhesive
- 24: mold

## Claims

1. A structure protection sheet to be attached to a surface of a structure, the structure protection sheet comprising, in order:
a bonding layer;
a polymer-cement hardened layer; and
a resin layer.

2. The structure protection sheet according to claim 1, wherein the bonding layer comprises an acrylic pressure-sensitive adhesive.

3. The structure protection sheet according to claim 1 or 2, wherein the structure protection sheet has a punching strength of 1.5 kN or more as measured by a punching test specified in JSCE-K 533.

4. The structure protection sheet according to claim 1 or 2, wherein the structure protection sheet has a bond force of 0.5 N/mm² or more when attached to the surface of the structure via the bonding layer.

5. The structure protection sheet according to claim 1, 2, 3, or 4, wherein the bonding layer has a thickness of 20 to 500 µm.

6. The structure protection sheet according to claim 1, 2, 3, 4, or 5, wherein
the polymer-cement hardened layer comprises a cement component and a resin, and
a content of the resin in the polymer-cement hardened layer is from 10 to 40% by weight.

7. The structure protection sheet according to claim 1, 2, 3, 4, 5, or 6, further comprising a mesh layer.

8. A method for producing a reinforced structure using the structure protection sheet according to claim 1, 2, 3, 4, 5, 6, or 7, the method comprising:
attaching the structure protection sheet to a surface of a structure via the bonding layer.
